# EUROPEAN PATENT SPECIFICATION

(11) **EP 3 599 822 B1**
(45) Date of publication and mention of the grant of the patent: **09.06.2021**
(21) Application number: 18714064.5
(22) Date of filing: 19.03.2018
(51) Int. Cl.: E01C 9/00, A01G 13/02, A01G 23/04

(54) **AERATED TREE PIT**
BELÜFTETE PFLANZGRUBE
FOSSE D'ARBRE AÉRÉE

(30) Priority: 30.03.2017 GB 201705144; 31.10.2017 GB 201717980
(43) Date of publication of application: 05.02.2020
(73) Proprietor: Green Blue Urban Ltd., Robertsbridge TN32 5BS (GB)
(72) Inventor: BOWIE, Dean, Robertsbridge TN32 5BS (GB)
(74) Representative: Brookes IP
(86) International application number: PCT/GB2018/050708
(87) International publication number: WO 2018/178630

(56) References cited:
- EP-A1- 2 808 447
- WO-A1-95/35414
- DE-U1-202014 100 683
- US-A- 5 924 238

## Description

The present invention relates to tree pits adapted to provide a healthy environment for urban trees and to maximise the benefits such trees provide.

There are many benefits associated with providing trees in urban areas: these include making the urban environment pleasant to live in by improving the microclimate around the tree, improving the visual impact of the area, providing shade, and so on. In addition, trees affect air quality: trees remove gaseous air pollution by for example uptake of gases via leaf stomata, and also remove particulate pollution by intercepting airborne particles, among other things. In particular, trees are proven to be effective in removing pollutants and particulates within their leaf and branch structures, sequestrating carbon within cellulose fibres, and breaking down other pollutants within the root and soil areas. Pollution by Nitrogen dioxide and particulates in urban areas is recognised to cause significant health problems worldwide and so it is important to support urban trees in combatting this problem.

For urban trees placed alongside roads and in paved areas it is well known to provide a tree pit into which the roots of a young tree may be placed, the tree pit designed to protect the roots as they grow, and to accommodate service pipes and other features of urban areas. Such tree pits are arranged to protect tree roots from damage due to vehicles, particularly heavy Lorries, and also seek to maintain soil quality by optimising, as far as possible, nutrition, air and water available to the roots. GB2518657 discloses a modular anti-soil-compaction apparatus which may be used in such a tree pit. Such tree pits in addition generally provide air space above the soil and beneath the paving, however air flow to this area is very limited and the soil/root system capacity to be utilised as an air cleaner is limited by the restricted air movement

WO 95/35414A1 discloses a tree pit according to the preamble of claim 1.

Inadequate protection of urban tree environments means that often urban trees do not survive for long. Replacing such trees is expensive and time consuming and also means that the benefits of having urban trees is reduced.

It would therefore be advantageous to provide an environment that more comprehensively protects urban trees.

The present invention is directed to an improved tree pit for improving the outcome for urban trees and providing for such trees to benefit the environment.

More specifically, this invention provides for increased gaseous exchange in the tree or plant rootzone, to facilitate enhanced air pollution removal.

The present invention provides an aerated tree pit comprising a tree pit including at least one anti-soil-compaction means with sidewalls and a base, an air inlet in fluid communication with the atmosphere and said sidewalls and/or base, an outlet in fluid communication with said sidewalls and base, and with the atmosphere, and means to urge air to pass from said inlet to said outlet and passing through said sidewalls and/or base providing for aeration of said tree pit.

Preferably the aerated tree pit further comprises a tree guard positioned above the soil to provide a protected area within which a tree may grow.

Preferably the aerated tree pit includes several anti-soil-compaction means. Preferably each of said anti-soil-compaction means has a side and a base.

Preferably said anti-soil-compaction means includes a cover providing for a gap at the top of any content provided to the anti-soil-compaction means.

Preferably said air inlet is connected with a pipe passing into said tree pit.

Preferably walls of said pipe are adapted to provide fluid communication between an inside and an outside of said pipe.

Preferably said pipe walls include openings.

Preferably said pipe walls are perforated.

Preferably said pipe walls are permeable.

Preferably said outlet is in fluid communication with said gap. Said urging means comprises a mechanism to pull air through said outlet and into the atmosphere, and wherein said mechanism is an impeller, and/or a fan.

Preferably said mechanism is powered.

Preferably said power is solar power.

Preferably said power is wind power.

Preferably said power is mains power.

Preferably said air inlet is positioned within said protected area.

Preferably said air inlet is positioned on the tree guard.

Preferably said air outlet is positioned within said protected area.

Preferably said air outlet is positioned on the tree guard.

Preferably air urged to pass from the inlet to the outlet passes through the sidewalls and/or base via soil or other planting media within the tree pit.

A preferred embodiment of the invention will now be described by way of example only and with reference to the accompanying drawings in which:
Fig. 1 shows a cross section of an aerated tree pit in accordance with the present invention,
Fig. 2. shows the aerated tree pit of Fig. 1 indicating air flow, and
Figs. 3 to 6 show examples of air flow through the aerated tree pit of Figs. 1 and 2.

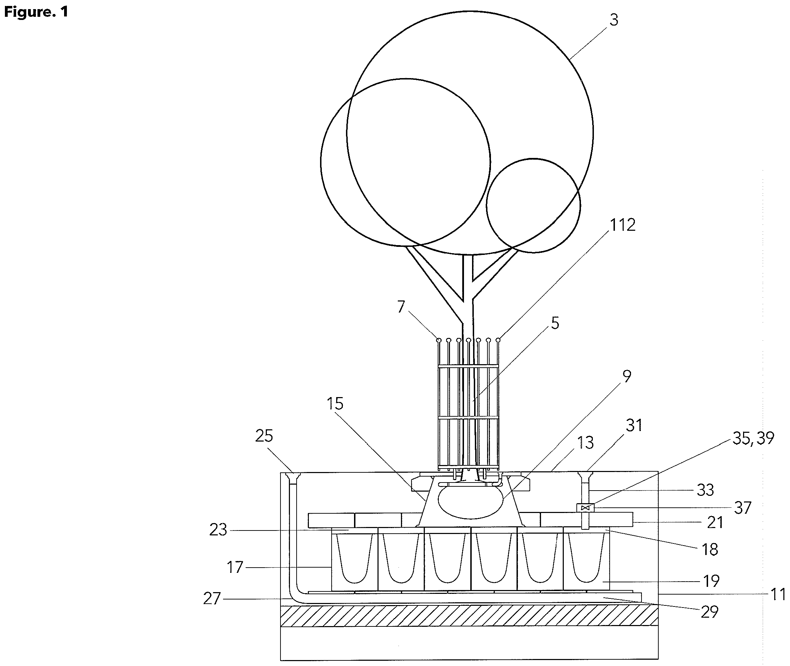

The cross-sectional view of Fig. 1 shows an exemplary tree 3 with a trunk 5 surrounded by a tree guard 7 with a root ball 9 inserted into a tree pit 11, the tree pit positioned below a pavement surface 13. As can be seen, root ball 9 is positioned in the upper portion of the tree pit 11, and is protected by a conventional root director 15, the arrangement providing for the roots to grow out from the bulb and into the tree pit as the tree matures.

Fig. 1 also shows a conventional anti-soil-compaction apparatus 17 within the tree pit 11 comprising several panels 19 engaged together to form a matrix structure within which tree roots may be accommodated and grow, although alternative arrangements are also possible and may be used with the present invention. In use, soil suitable for growing trees may be placed within the tree pit 11, to nourish roots that, in time, will grow outwardly and away from the ball.

Above the anti-soil-compaction apparatus 17 is shown a layer of drainage cells 21, part of the conventional water management system provided within the tree pit. Similar drainage cells may be provided under the anti-soil-compaction apparatus, as required.

An air flow deck 23 is provided above the anti-soil-compaction apparatus 17 and below the drainage cells 21. In a preferred arrangement soil (not shown) may be provided to the tree pit 11 to a predetermined depth 18 within the anti-soil-compaction apparatus, the depth providing for an air gap between the soil and the drainage cells, the air gap providing the air flow deck 23. Flexible cover material may be provided to the anti-soil-compaction apparatus to protect the air gap and ensure air may flow freely above the soil.

Fig. 1 also shows an air inlet 25 positioned level with, and in, the surface of the pavement local to the tree pit. Fig. 1 further shows the air inlet 25 attached to a pipe 27 which extends into the tree pit, past the walls of the anti-soil-compaction apparatus 17, then curving such that a further portion 29 passes under the anti-soil-compaction apparatus, extending to the end of the tree pit.

In an alternative arrangement, such pipe (or pipes) could be installed within the anti-soil compaction apparatus.

Where the term 'soil' is used in this description, it generally refers to a soil for use in urban tree planting or other such alternative material referred to as planting media.

Where the term 'tree' is used, it generally means tree or shrub, or other living plant material used in this arrangement.

The air inlet is arranged to be in fluid communication with the atmosphere so that air can pass into pipe 27 and pass down into the tree pit and along under the anti-soil-compaction apparatus. Pipes 27 and 29 have walls which permit air to flow therethrough, for example the pipe walls may be permeable, or contain small openings to allow air to flow therethrough into the tree pit and more particularly into the soil in the anti-soil-compaction apparatus, providing for a limited aeration of the soil therein.

Fig. 1 further shows an air outlet 31, also positioned level with, and in, the surface of the pavement 13 local to the tree pit: this air outlet is shown in Fig. 1 to be distal the air inlet, and positioned on an opposite side of the tree pit although any position is suitable. The air outlet is in fluid communication with the atmosphere and also, via pipe 33, with air in the air flow deck 23.

A mechanism 35 to promote flow of air out of the air outlet is shown to be provided within the air outlet, for example in region 37 of pipe 33, and this mechanism 35 may comprise a fan 39, or other type of impeller operative to urge air from the air flow deck 23 through region 37, pipe 33 and outlet 31 into the atmosphere.

Mechanism 35 is operative to, as it urges air to flow, suck air through air inlet 25, and pipes 27 and 29, via openings, perforations, or their permeable nature, and through any soil placed in the tree pit 11 into air flow deck 23, where it then flows out of air outlet 31 through pipe 33.

The tree pit of the present invention, therefore, provides for air to flow across the top of the soil in the tree pit and also through any roots present in the tree pit, to the benefit of the tree and of the environment. Enhanced airflow through the soil or planting media thereby enhances the trees ability to filter out harmful pollutants such as Nitrogen dioxide.

The mechanism 35 may be powered by electricity either provided by the mains or by wind or solar power, or by other means.

Tree guard 7 is conventional, being commonly provided to protect trees for example from accidental damage or vandalism. It is contemplated that the power source for the mechanism 35 may be positioned within the tree guard for protection. In the case of solar power portions of the tree guard, for example the circular or vertical rods of the tree guard may include solar panels or have solar panels mounted thereon 112. Alternatively, the solar panels may be placed on the tree or on poles which extend higher than the tree, although as the tree matures solar panels, where ever placed, may be obscured by the branches and leaves, rendering them less effective or ineffective. For wind power, small turbines may be made available and positioned to take advantage of any breeze or wind that may be available, although constraints regarding positioning of such turbines may also apply, in a similar fashion to solar panels.

Solar panels or turbines may alternatively be positioned outside the tree guard, as required.

The mechanism 35 may also be powered by electricity from the mains or an alternative source and power cables and suchlike would be positioned conventionally to provide power while protecting the public.

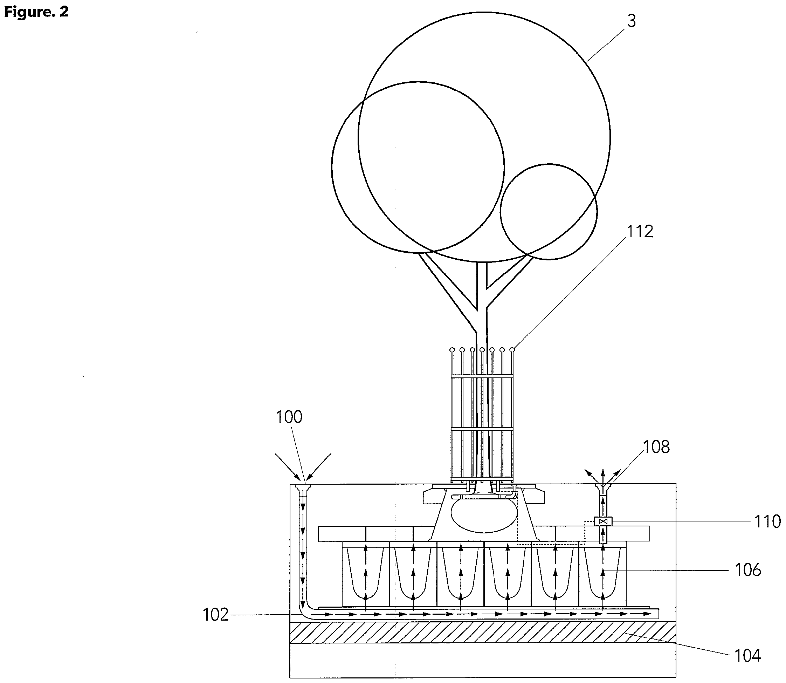

Fig. 2 shows the arrangement of Fig. 1 showing the flow of air through the tree pit when the mechanism is operative. In particular with the mechanism 35, 39 such as a fan is operative, air flow 100 flows through the air inlet 25, air flow 102 flows through pipe 27, air flow 104 flows through pipe 29, air flow 106 flows through soil in each anti-soil-compaction apparatus, out into the air flow deck, and finally air flow 108 flows out through pipe 33 and through air outlet into the atmosphere. The air flowing out of the air outlet will have been processed by, where it passes through the soil, the roots, and where it passes over the soil in the air gap, the soil, but it is contemplated that the air will thereby have had pollutants removed.

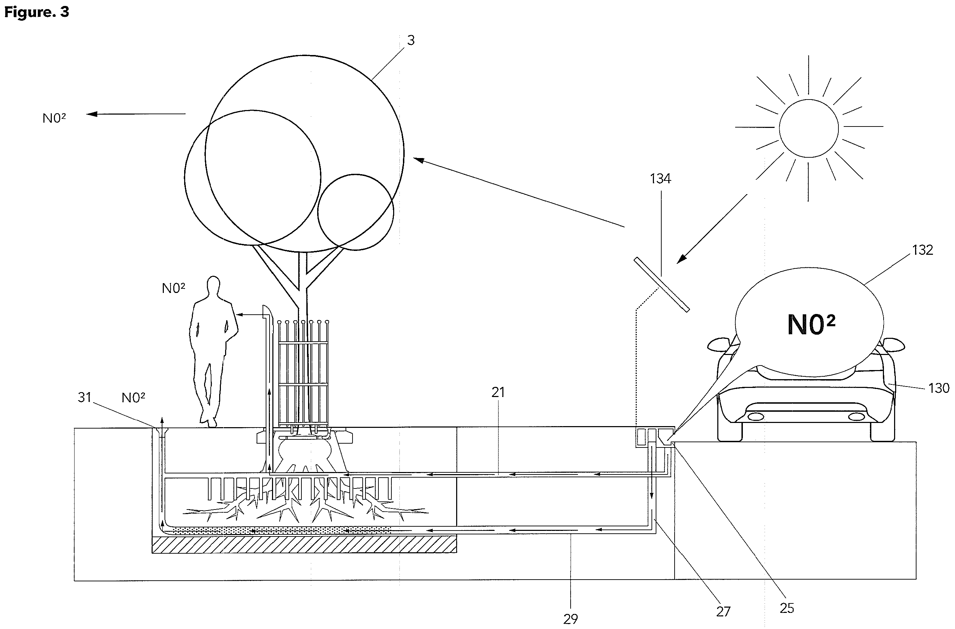

Figs. 3 - 6 show the invention at work. In particular, Fig. 3 shows a vehicle 130 passing by a tree 3 in a tree pit in accordance with the present invention, with a cloud of Nitrogen dioxide and particulates 132 emitted therefrom. Fig. 3 also shows the NO2 and particulates being drawn through the opening 25 into pipes 27, 29 and exiting through opening 31 or passing through the drainage cells 21 or roots to exit into the atmosphere.

The processing of nitrogen from the atmosphere, or nitrogen dioxide from for example vehicle emissions, by nitrogen fixing bacteria or nitrifying bacteria, is well known, as is the benefit to trees and other plants that can result from this process, and Fig. 3 shows the passage of for example NO₂ and particulates 132 from vehicle emissions through the leaves of an exemplary tree, and also by passing through the soil around the tree, the tree roots and through components of the aerated tree pit of the present invention.

In addition, this processing can be enhanced by lining the pipes 27 and other features with nitrogen-fixing, nitrifying or other bacteria which also has this effect, or the pipes may be made from material with such bacteria embedded therein. In particular the pipe walls may be lined with or include bacteria or a bacterial mixture, and the bacteria or bacterial mixture may contain nitrogen-fixing, nitrifying or denitrifying bacteria. The advantage of this arrangement is that air passing through the aerated tree pit is cleansed by the soil and also by the nitrifying and denitrifying, and other bacteria lining or comprising part of the pipes and other features of the pit.

Fig. 3 also shows an exemplary solar panel 134 and a wind power source 136 adjacent the tree, which may provide a power source for the pump or other impelling means to urge air through the soil and roots.

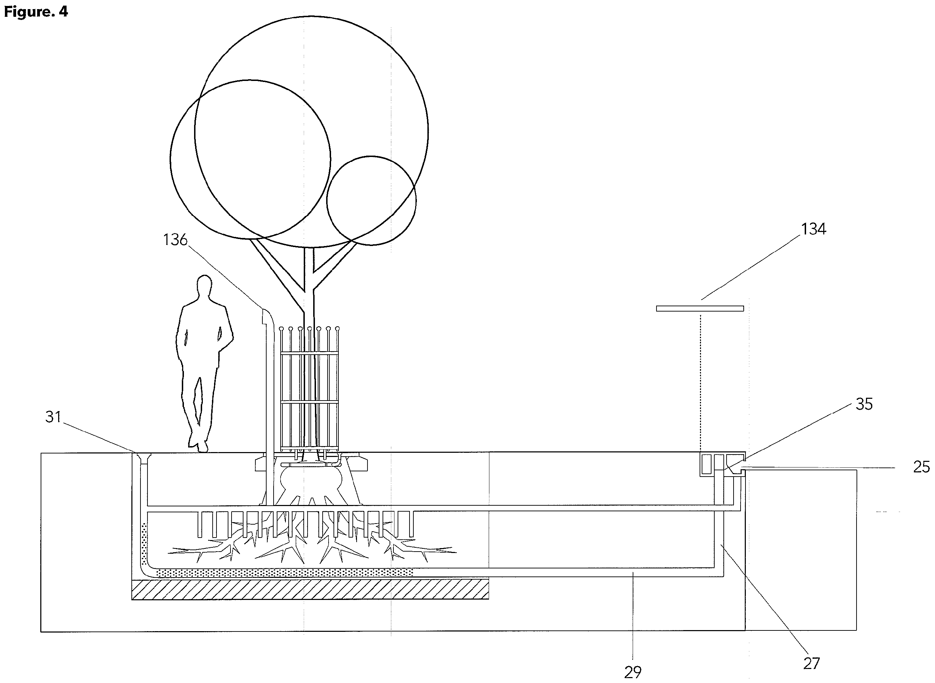

Fig. 4 shows the arrangement of Fig. 3 without a vehicle 130.

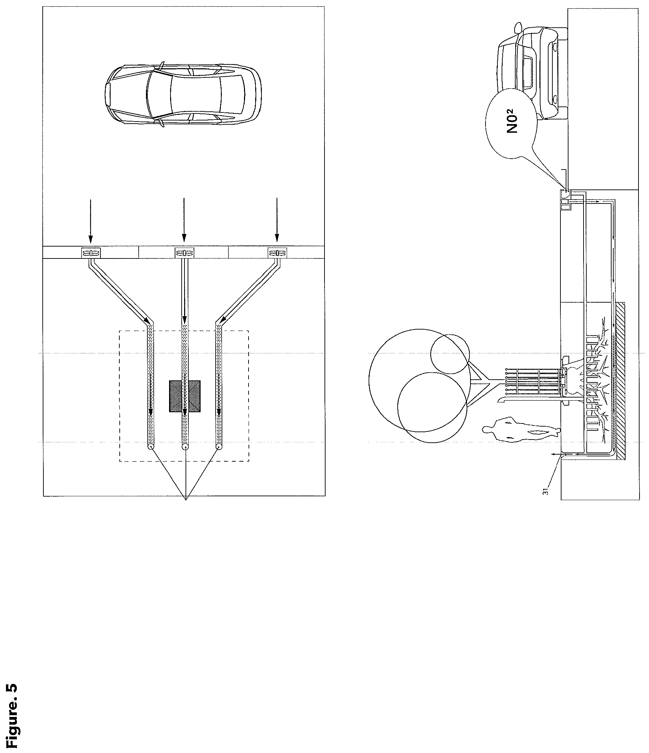

Fig. 5 shows a plan view of the passage of air through the pipes as set out in Fig. 3, showing that air intakes feeding the tree pit may be spaced in more than one position around the tree pit, and also shows the passage of air through the tree pit via the roots, soil, drainage cells and pipes to exit the arrangement through exit passages 31.

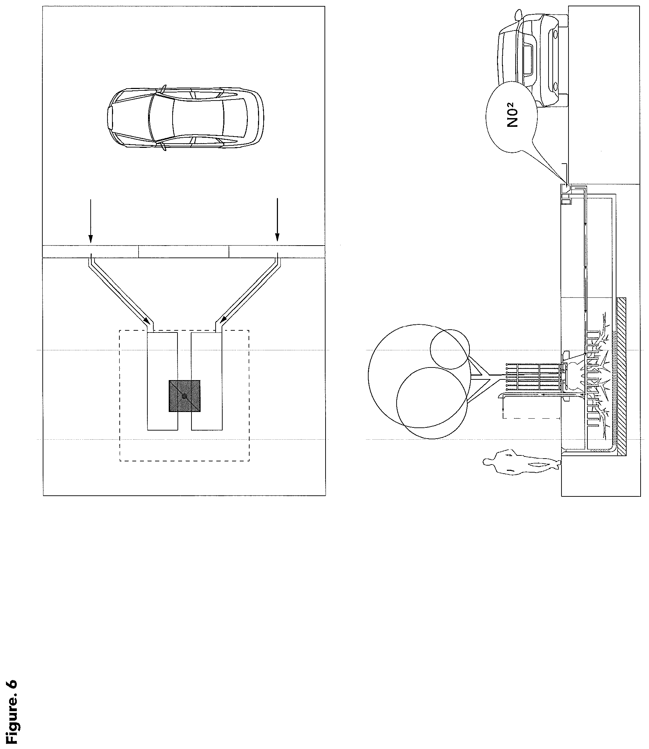

Fig. 6 shows a similar plan view, but with a single exit pipe placed on for example a wind tower adjacent the tree, and with two air intakes feeding air into the system.

In use, a section of pavement in which it is desired to plant a tree may be provided with a tree pit containing conventional paraphernalia required to provide a stable and safe environment for an urban tree. This paraphernalia may include one or more anti-soil-compaction apparatus with an air flow deck, suitable soil placed therein, drainage cells as needed and a root director within which a tree bulb may be placed. Once the tree root ball is placed therein other conventional equipment may be provided including for example a conventional root irrigation system, tree grille, and so on. With a tree in place a tree guard may also be placed around the tree.

In addition, and in accordance with the present invention the tree pit is also provided with at least one air inlet connected to at least one pipe 27 which extends into the tree pit with a further portion 29 which curves under the anti-soil-compaction apparatus, along the base of the tree pit. Pipes 27, 29 have walls which permit air to flow therethrough, for example they may have permeable walls or walls made from material with openings or suchlike, and may also be lined with, or have embedded within, nitrogen-fixing, nitrifying, denitrifying or other bacteria. Air inlet and pipes 27, 29 provide fluid communication between the atmosphere and the base of the tree pit.

The tree pit is further provided with at least one air outlet 31. This air outlet may be positioned some distance from the air inlet, for example on the opposite side of the tree pit, but an alternative position or positions may also be suitable. The at least one air outlet is connected to a respective pipe 33 which extends into the air flow deck of the tree pit, the air outlet and pipe providing fluid communication between the air flow deck and the atmosphere.

A mechanism for urging air to flow is provided to the air outlet pipe 33, for example in a section 37, the mechanism being for example a fan or suchlike. When powered the fan urges air to flow in through the air inlet, through pipes 27, 29, out through the permeable walls of pipes 27, 29 or through openings therein, through soil contained in the anti-soil-compaction apparatus, out into the air flow deck 23, through pipe 33 and out through air outlet 31. This steady flow of air assists in aerating roots, and also provides a steady flow of air over the soil in the apparatus, maximising the opportunity to control and manage pollution in the air flowing through the tree pit.

The mechanism may be powered by electricity, either from the mains or from other sources. Examples of alternative sources of energy include solar power, wind power, or other appropriate sources. Solar cells or wind turbines may be positioned to provide energy to the mechanism. For example, solar cells or wind turbines may be positioned close to the tree pit so it is straightforward to utilise the energy thus provided, however to avoid vandalism or accidental damage such sources may be positioned within the tree guard or somewhere about the tree. A variety of suitable positions are shown in Figs. 3 and 4.

Rainwater will flow into the tree pit, and in particular may remain for a time in the tree pit in and around pipes 27, 29 but will be managed conventionally, and it is contemplated that such rainwater will in any event drain away within for example 48 hours.

If the air inlet and outlet are positioned parallel to the pavement surface they may well become clogged with dirt and other debris, even when provided with conventional equipment to clear any such material, such as a lift and swivel lid, or an inline brush filter or such like. Local or municipal authorities are generally responsible for most urban trees and so it is essential to ensure the burden of maintenance and care is reduced as much as possible. Therefore, it is contemplated that the air inlet and outlet may be positioned to avoid such potential of clogging with debris, and so they may be positioned within the tree guard area in an orientation that discourages clogging, for example not parallel to the ground, and so on. An example of an air inlet positioned such as to avoid clogging from debris may be seen in Fig. 3, where the air inlet is positioned at an angle to the ground. An example of an air outlet positioned such as to avoid clogging from debris may be seen in Fig. 4, where the air outlet is positioned at the top of a post provided to support a wind turbine.

The invention is restricted to the appended claims. The pipes 27, 29 and 33 may be considered to be conduits in general and may not be pipes. Air flow may not proceed upwardly through the soil or tree pit but may flow sideways from the pipe 27 running down the side of the tree pit. The air inlet may be positioned anywhere in the tree pit, and may extend into the anti-soil-compaction apparatus rather than along a sidewall of the tree pit - this is also true of pipes 29 and 33. Pipe 27 may not curve to form pipe 29 but may remain as a straight pipe entering into the tree pit. The mechanism for urging air flow may be positioned elsewhere than adjacent the air outlet, for example in the air inlet or elsewhere.

## Claims

1. An aerated tree pit (11) comprising:
a tree pit including at least one anti-soil-compaction means (17) with sidewalls and a base,
an air inlet (25) in fluid communication with the atmosphere and said sidewalls and/or base,
an outlet (31) in fluid communication with said sidewalls and base, and with the atmosphere,
means (35, 39) to urge air to pass from said inlet to said outlet and passing through said sidewalls and/or base providing for aeration of said tree pit, **characterized in that** said urging means comprises a mechanism (35) to pull air through said outlet and into the atmosphere, and
wherein said mechanism is an impeller, and/or a fan (39).

2. The aerated tree pit of claim 1, further comprising a tree guard (7) positioned above the soil to provide a protected area within which a tree (3) may grow

3. The aerated tree pit of claim 1, including several anti-soil-compaction means.

4. The aerated tree pit of claim 3, wherein:
each of said anti-soil-compaction means has a side and a base, and/or
wherein said anti-soil-compaction means includes a cover providing for a gap at the top of any content provided to the anti-soil-compaction means.

5. The aerated tree pit of claim 1, wherein said air inlet is connected with a pipe (27, 29, 33) passing into said tree pit.

6. The aerated tree pit of claim 5, wherein walls of said pipe are adapted to provide fluid communication between an inside and an outside of said pipe.

7. The aerated tree pit of claim 5 or claim 6, wherein said pipe walls:
include openings, and/or
are perforated, and/or
are permeable.

8. The aerated tree pit of claim 4, wherein said outlet is in fluid communication with said gap.

9. The aerated tree pit of claim 1, wherein said mechanism is solar, wind or mains powered.

10. The aerated tree pit of claim 1, wherein said air inlet is positioned:
within said protected area, and/or
on the tree guard.

11. The aerated tree pit of claim 2, wherein said air outlet is positioned:
within said protected area, and/or
on the tree guard.

12. The aerated tree pit of claim 1, wherein air urged to pass from the inlet to the outlet passes through the sidewalls and/or base via soil or other planting media within the tree pit.

13. The aerated tree pit of claim 12 wherein said pipe walls:
are lined with bacteria, and/or
include a bacterial mixture.

14. The aerated tree pit of claims 12 or 13 wherein said bacteria or bacterial mixture includes nitrifying bacteria

15. The aerated tree pit of claims 12 or 13 wherein said bacteria or bacterial mixture includes denitrifying bacteria.

## Patentansprüche

1. Belüftete Baumpflanzgrube (11) mit:
einer Baumpflanzgrube, die mindestens eine Anti-Erdverdichtungseinrichtung (17) mit Seitenwänden und einer Basis aufweist,
einem Lufteinlass (25) in Fluidkommunikation mit der Atmosphäre und den Seitenwänden und/oder der Basis,
einem Auslass (31) in Fluidkommunikation mit den Seitenwänden und der Basis und mit der Atmosphäre,
einer Einrichtung (35, 39), die Luft dazu veranlasst, vom Einlass zum Auslass zu strömen und die Seitenwände und/oder die Basis zu durchströmen, um eine Belüftung der Baumpflanzgrube zu bewirken,
**dadurch gekennzeichnet, dass**
die Veranlassungseinrichtung einen Mechanismus (35) zum Saugen von Luft durch den Auslass und in die Atmosphäre aufweist, und
wobei der Mechanismus ein Laufrad und/oder ein Gebläse (39) ist.

2. Belüftete Baumpflanzgrube nach Anspruch 1, die ferner einen Baumschutz (7) aufweist, der über der Erde positioniert ist, um einen geschützten Bereich zu schaffen, in dem ein Baum (3) wachsen kann.

3. Belüftete Baumpflanzgrube nach Anspruch 1, die mehrere Anti-Erdverdichtungseinrichtungen aufweist.

4. Belüftete Baumpflanzgrube nach Anspruch 3, bei der:
jede der Anti-Erdverdichtungseinrichtungen eine Seite und eine Basis hat, und/oder
bei der die Anti-Erdverdichtungseinrichtung eine Abdeckung aufweist, die einen Spalt am oberen Teil eines Inhalts schafft, der zu der Anti-Erdverdichtungseinrichtung geliefert wird.

5. Belüftete Baumpflanzgrube nach Anspruch 1, bei der der Lufteinlass mit einem Rohr (27, 29, 33) verbunden ist, das in die Baumpflanzgrube hinein verläuft.

6. Belüftete Baumpflanzgrube nach Anspruch 5, bei der Wände des Rohrs derart ausgebildet sind, dass sie eine Fluidkommunikation zwischen der Innenseite und der Außenseite des Rohrs schaffen.

7. Belüftete Baumpflanzgrube nach Anspruch 5 oder Anspruch 6, bei der die Rohrwände:
Öffnungen aufweisen und/oder
perforiert sind und/oder
durchlässig sind.

8. Belüftete Baumpflanzgrube nach Anspruch 4, bei der der Auslass mit dem Spalt in Fluidkommunikation ist.

9. Belüftete Baumpflanzgrube nach Anspruch 1, bei der der Mechanismus sonnenenergie-, wind- oder versorgungsnetzbetrieben ist.

10. Belüftete Baumpflanzgrube nach Anspruch 1, bei der der Lufteinlass positioniert ist:
innerhalb des geschützten Bereichs und/oder
auf dem Baumschutz.

11. Belüftete Baumpflanzgrube nach Anspruch 2, bei der der Luftauslass positioniert ist:
innerhalb des geschützten Bereichs und/oder
auf dem Baumschutz.

12. Belüftete Baumpflanzgrube nach Anspruch 1, bei der Luft, die veranlasst wird, vom Einlass zum Auslass zu strömen, über die Erde oder ein anderes Pflanzmittel innerhalb der Baumpflanzgrube durch die Seitenwände und/oder die Basis strömt.

13. Belüftete Baumpflanzgrube nach Anspruch 12, bei der die Rohrwände:
mit Bakterien beschichtet sind und/oder
eine Bakterienmischung aufweisen.

14. Belüftete Baumpflanzgrube nach Anspruch 12 oder 13, bei der die Bakterien oder Bakterienmischung Nitrierbakterien aufweisen.

15. Belüftete Baumpflanzgrube nach Anspruch 12 oder 13, bei der die Bakterien oder Bakterienmischung Denitrierbakterien aufweisen.

## Revendications

1. Fosse d'arbre aérée (11) comprenant :
une fosse d'arbre qui inclut au moins un moyen de compactage à fonction de protection vis-à-vis du sol (17) qui est muni de parois latérales et d'une base ;
une entrée d'air (25) qui est en communication en termes de fluide avec l'atmosphère et lesdites parois latérales et/ou ladite base ;
une sortie (31) qui est en communication en termes de fluide avec lesdites parois latérales et ladite base, et avec l'atmosphère ;
un moyen (35, 39) pour pousser l'air de telle sorte qu'il passe depuis ladite entrée jusqu'à ladite sortie et qu'il traverse lesdites parois latérales et/ou ladite base, d'où la réalisation d'une aération de ladite fosse d'arbre ;
**caractérisée en ce que** ledit moyen de poussée comprend un mécanisme (35) pour aspirer l'air au travers de ladite sortie et dans l'atmosphère ; et
dans laquelle ledit mécanisme est un moyen de propulsion d'air et/ou un ventilateur (39).

2. Fosse d'arbre aérée selon la revendication 1, comprenant en outre un moyen de protection d'arbre (7) qui est positionné au-dessus du sol pour constituer une zone protégée à l'intérieur de laquelle un arbre (3) peut grandir.

3. Fosse d'arbre aérée selon la revendication 1, incluant plusieurs moyens de compactage à fonction de protection vis-à-vis du sol.

4. Fosse d'arbre aérée selon la revendication 3, dans laquelle :
chacun desdits moyens de compactage à fonction de protection vis-à-vis du sol comporte un côté et une base ; et/ou
dans laquelle ledit moyen de compactage à fonction de protection vis-à-vis du sol inclut un moyen de recouvrement qui permet de ménager un espace au niveau du sommet d'un quelconque contenu prévu en lien avec le moyen de compactage à fonction de protection vis-à-vis du sol.

5. Fosse d'arbre aérée selon la revendication 1, dans laquelle ladite entrée d'air est connectée à un tuyau (27, 29, 33) qui passe à l'intérieur de ladite fosse d'arbre.

6. Fosse d'arbre aérée selon la revendication 5, dans laquelle des parois dudit tuyau sont adaptées pour assurer une communication en termes de fluide entre un intérieur et un extérieur dudit tuyau.

7. Fosse d'arbre aérée selon la revendication 5 ou la revendication 6, dans laquelle lesdites parois de tuyau :
incluent des ouvertures ; et/ou
sont perforées ; et/ou
sont perméables.

8. Fosse d'arbre aérée selon la revendication 4, dans laquelle ladite sortie est en communication en termes de fluide avec ledit espace.

9. Fosse d'arbre aérée selon la revendication 1, dans laquelle ledit mécanisme est alimenté par énergie solaire, par énergie éolienne ou par électricité du secteur.

10. Fosse d'arbre aérée selon la revendication 1, dans laquelle ladite entrée d'air est positionnée :
à l'intérieur de ladite zone protégée ; et/ou
sur le moyen de protection d'arbre.

11. Fosse d'arbre aérée selon la revendication 2, dans laquelle ladite sortie d'air est positionnée :
à l'intérieur de ladite zone protégée ; et/ou
sur le moyen de protection d'arbre.

12. Fosse d'arbre aérée selon la revendication 1, dans laquelle l'air qui est poussé de telle sorte qu'il passe depuis l'entrée jusqu'à la sortie traverse les parois latérales et/ou la base via le sol ou tout autre substrat de plantation à l'intérieur de la fosse d'arbre.

13. Fosse d'arbre aérée selon la revendication 12, dans laquelle lesdites parois latérales de tuyau :
sont tapissées de bactéries ; et/ou
incluent un mélange bactérien.

14. Fosse d'arbre aérée selon la revendication 12 ou 13, dans laquelle lesdites bactéries ou ledit mélange bactérien inclu(en)t des bactéries de nitrification.

15. Fosse d'arbre aérée selon la revendication 12 ou 13, dans laquelle lesdites bactéries ou ledit mélange bactérien inclu(en)t des bactéries de dénitrification.
